# EUROPEAN PATENT APPLICATION

(11) **EP 4 686 744 A1**
(43) Date of publication of application: **04.02.2026**
(21) Application number: 25192178.9
(22) Date of filing: 28.07.2025
(51) Int. Cl.: C09D 11/54, C09D 11/40, B41M 5/00

(54) **METHOD OF APPLYING INK COMPOSITION AND SET OF LIQUIDS**

(30) Priority: 30.07.2024 JP 2024123709
(71) Applicant: Brother Kogyo Kabushiki Kaisha, Nagoya, Aichi 467-8561 (JP)
(72) Inventor: IGUCHI, Makito, Nagoya, 467-8562 (JP)
(74) Representative: J A Kemp LLP

(57) **Abstract**

A method of applying an ink composition may comprise: applying a pretreatment liquid onto a medium (2) and drying the same; and thereafter applying an ink composition onto the medium (2) and drying the same. The medium (2) may be a non-absorbable or low-absorbable medium. The pretreatment liquid may comprise a flocculant of cationic polymer of which cation concentration is 6.0 Eq/L or more. A drying rate of the pretreatment liquid after its drying may be 50% or more. A static surface tension of all components of the ink composition, including organic solvent(s), may be 25.2 mN/m or more and 29.3 mN/m or less. A difference between this static surface tension and a static surface tension of remaining component(s) of the ink composition after its drying of the ink composition is 3.5 mN/m or less. The organic solvent(s) may comprise at least one organic solvent having a static surface tension of 28.0 mN/m or more and 34.0 mN/m or less. A content of the at least one organic solvent relative to an overall amount of the ink composition is 7.5 weight% or more and 24.0 weight% or less.

## Description

### TECHNICAL FIELD

The disclosure herein provides a technology relating to a method of applying an ink composition onto a medium, and set of liquids.

### BACKGROUND ART

JP Patent Application Publication No. 2019-81351 describes a method of applying an ink composition that includes applying a pretreatment liquid onto a medium and applying an ink composition onto the medium. In this method, a difference between a surface tension of all components of the ink composition and a surface tension of one or more remaining components of the ink composition after the ink composition has been vaporized to a predetermined evaporation rate is at a predetermined value or less.

### DESCRIPTION

The disclosure herein provides a novel technology for suppressing spread of an ink composition while suppressing a decrease in uniformity within a solid area (so-called solid uniformity), in applying the ink composition onto a non-absorbable medium or a low-absorbable medium.

A method of applying an ink composition disclosed herein may include applying a pretreatment liquid onto a medium; drying the pretreatment liquid on the medium after the applying of the pretreatment liquid; applying an ink composition onto the medium after the drying of the pretreatment liquid; and drying the ink composition on the medium after the applying of the ink composition. The medium may be a non-absorbable medium or a low-absorbable medium. The pretreatment liquid may include a flocculant of cationic polymer. A cation concentration of the cationic polymer may be 6.0 Eq/L or more. A drying rate of the pretreatment liquid after the drying of the pretreatment liquid may be 50% or more. The ink composition may include an anionic solid component, one or more organic solvents, a surfactant, and water. A static surface tension of all components of the ink composition may be 25.2 mN/m or more and 29.3 mN/m or less. A difference between the static surface tension of all components of the ink composition and a static surface tension of one or more remaining components of the ink composition after the drying of the ink composition may be 3.5 mN/m or less. The one or more organic solvents may include at least one organic solvent having a static surface tension of 28.0 mN/m or more and 34.0 mN/m or less. A content of the at least one organic solvent relative to an overall amount of the ink composition may be 7.5 weight% or more and 24.0 weight% or less.

When an ink composition having a relatively low static surface tension (simply termed "surface tension" hereinafter) is applied onto a medium, the ink composition may unexpectedly spread over the medium. This becomes pronounced especially when the medium is a non-absorbable medium or a low-absorbable medium. In the method of applying the ink composition described above, the pretreatment liquid including the flocculant having the cation concentration of 6.0 Eq/L or more is applied onto the medium in advance. Thus, when the ink composition is applied onto the medium, the cationic flocculant in the pretreatment liquid can flocculate the anionic solid component of the ink composition, thereby suppressing spread of the ink composition.

However, when a relatively large amount of ink composition is used to form a solid area, insufficient flocculation of the solid component may occur even using the above pretreatment liquid. In this case, the ink composition to form the solid area on the medium is gradually dried on the medium. In the course of the drying, Marangoni convection may be generated due to a surface tension gradient associated with unevenly distributed components of the ink composition. The Marangoni convection may unexpectedly contract the ink composition and/or cause a coffee ring phenomenon, thus may decrease solid uniformity. In this regard, the method of applying the ink composition described above adjusts the surface tensions of the ink composition before and after the drying such that the difference therebetween becomes 3.5 mN/m or less. This suppresses a significant change in the surface tension of the ink composition during the drying. Therefore, a decrease in solid uniformity can be suppressed.

The drying rate of the pretreatment liquid after the drying of the pretreatment liquid may be 70% or more.

The drying rate of the pretreatment liquid after the drying of the pretreatment liquid may be 100%.

The cationic polymer may include a polyallylamine family.

The polyallylamine family may include a methyldiallylamine acetate polymer, and a cation concentration of the polyallylamine family may be 7.5 Eq/L or more.

The content of the at least one organic solvent relative to the overall amount of the ink composition may be 10 weight% or more and 18 weight% or less.

The applying of the ink composition may be performed by a line head configured to eject the ink composition.

A set of liquids comprising the above pretreatment liquid and ink composition is also novel and useful. The set of liquids may be used to apply an ink composition onto a medium which is a non-absorbable medium or a low-absorbable medium. The set may include a pretreatment liquid to be applied onto the medium; and an ink composition to be applied onto the medium and then dried after the pretreatment liquid has been applied onto the medium. The pretreatment liquid may include a flocculant of cationic polymer. A cation concentration of the cationic polymer may be 6.0 Eq/L or more. The ink composition may include an anionic solid component, one or more organic solvents, a surfactant, and water. A static surface tension of all components of the ink composition may be 25.2 mN/m or more and 29.3 mN/m or less. A difference between the static surface tension of all components of the ink composition and a static surface tension of one or more remaining components of the ink composition after drying may be 3.5 mN/m or less. The one or more organic solvents may include at least one organic solvent having a static surface tension of 28.0 mN/m or more and 34.0 mN/m or less. A content of the at least one organic solvent relative to an overall amount of the ink composition may be 7.5 weight% or more and 24.0 weight% or less.
FIG. 1 is a diagram illustrating a configuration of an image forming apparatus 10.
FIG. 2 is a cross-sectional view along a line II-II in FIG. 1.
FIG. 3 is a diagram illustrating a comparative example where an ink spreads when applied onto a medium 2 on which a pretreatment liquid has been already applied.
FIG. 4 is a diagram illustrating that a spread of the ink is suppressed when applied onto the medium 2 on which the pretreatment liquid has been already applied.
FIG. 5 is a diagram illustrating a comparative example where solid uniformity decreases due to a surface tension gradient of an ink caused during drying of the ink used to form a solid image on the medium 2 on which the pretreatment liquid has been already applied.
FIG. 6 is a diagram illustrating that a significant change in the surface tension of an ink is suppressed during drying of the ink used to form a solid image on the medium 2 on which the pretreatment liquid has been already applied, thus suppressing a decrease in solid uniformity.

### (Configuration of Image Forming Apparatus 10)

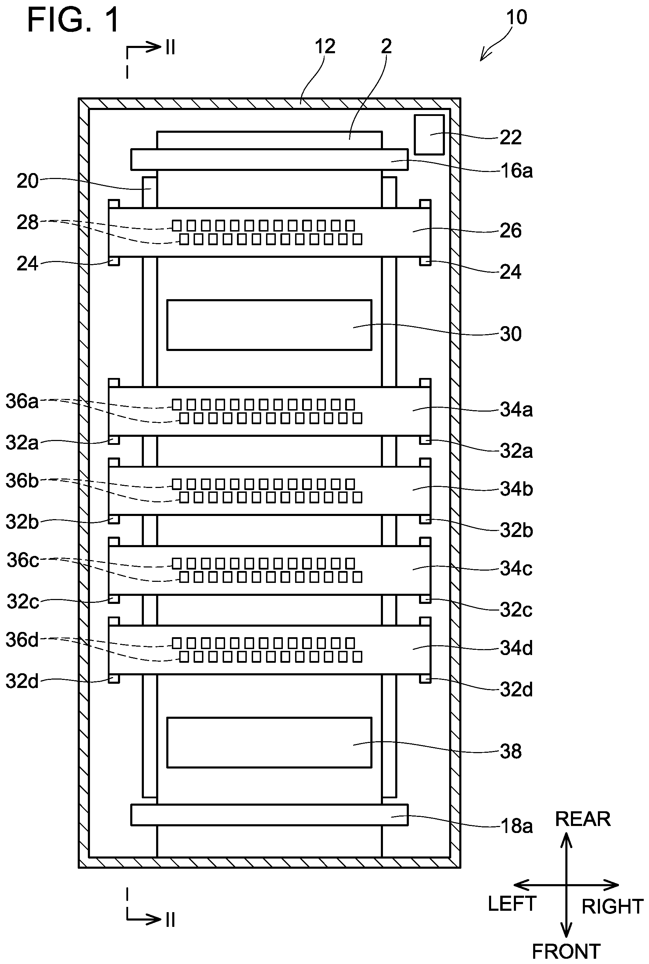

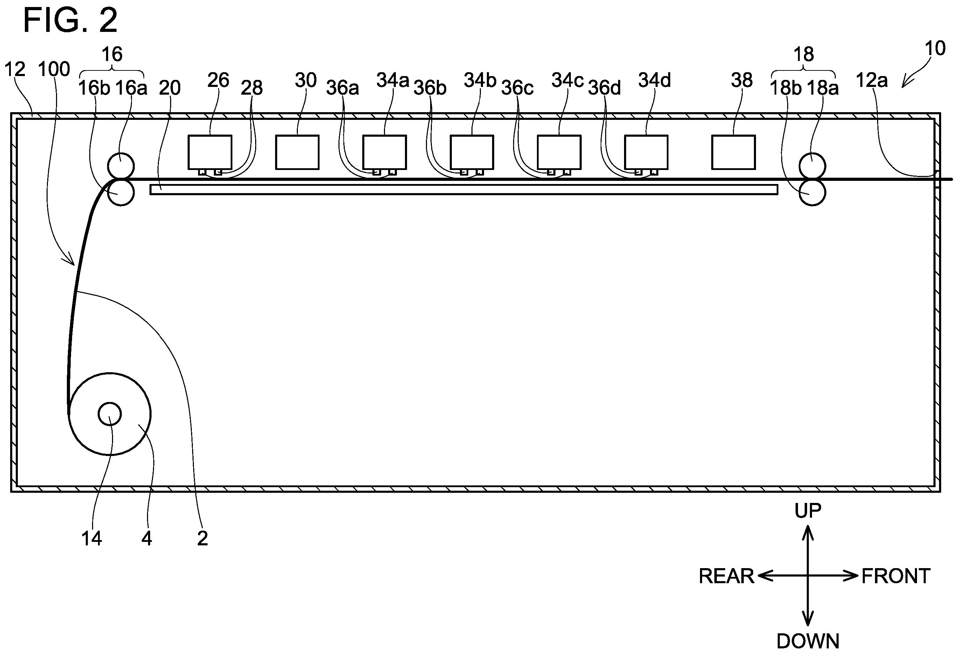

Referring to the drawings, an image forming apparatus 10 according to an embodiment is described. As illustrated in FIGS. 1 and 2, the image forming apparatus 10 is a printer configured to form images on a medium 2 with an ink. Specifically, the image forming apparatus 10 ejects the ink toward the medium 2 according to an inkjet scheme to form images on the medium 2. The image forming apparatus 10 is used on a floor or a rack. In another embodiment, the image forming apparatus 10 may be used on a desk.

In the image forming apparatus 10, some components such as an ink line head 34a comprising nozzles 36a for ink ejection do not move. That is, the image forming apparatus 10 is a so-called line printer. In FIGS. 1 and 2, a moving direction of the medium 2 is defined as a front-rear direction of the image forming apparatus 10. Specifically, the medium 2 moves from a rear end of the image forming apparatus 10 toward a front end thereof. A width direction of the medium 2 corresponds to a right-left direction of the image forming apparatus 10. Further, the direction perpendicular to the page on which FIG. 1 is depicted corresponds to an up-down direction of the image forming apparatus 10.

The image forming apparatus 10 comprises a housing 12, a holder 14, two roller pairs 16, 18, a platen 20, and a controller 22. The controller 22 is communicably connected to components of the image forming apparatus 10 and controls operations of these components. For the purpose of illustration, FIG. 1 illustrates components housed in the housing 12, however, these components are not necessarily located as depicted.

The housing 12 comprises an outlet 12a. The outlet 12a is located in the front surface of the housing 12. The outlet 12a is a through hole extending through the housing 12 in the front-rear direction. The medium 2 on which images have been recorded (see FIG. 2) exits from the outlet 12a.

The holder 14 supports a roll 4 on which the medium 2 is rolled around. The medium 2 is a long sheet. The holder 14 is rotated by a feed motor (not illustrated). The roll 4 supported on the holder 14 rotates with the rotation of the holder 14.

There is a path 100 between the holder 14 and the outlet 12a, and the medium 2 moves along the path 100. Images are recorded on the medium 2 while the medium 2 is moving along the path 100.

One roller pair 16 comprises a feed roller 16a and a pinch roller 16b, and the other roller pair 18 comprises a feed roller 18a and a pinch roller 18b. The feed rollers 16a, 18a contact the corresponding pinch rollers 16b, 18b to form nips. The roller pairs 16, 18 are rotated by the feed motor (not illustrated). The first roller pair 16 rotates while nipping the medium 2, thereby moving the medium 2 from the roll 4 forward. The second roller pair 18 is located downstream of the first roller pair 16 on the path 100. The second roller pair 18 rotates while nipping the medium 2, thereby moving the medium 2 toward the outlet 12a. The number and arrangements of the roller pairs 16, 18 are not particularly limited.

The platen 20 is located between the first roller pair 16 and the second roller pair 18. The platen 20 supports the medium 2.

The image forming apparatus 10 further comprises a frame 24 and a pretreatment liquid line head 26. The frame 24 supports the pretreatment liquid line head 26. A plurality of nozzles 28 is open on the lower surface of the pretreatment liquid line head 26. The nozzles 28 are arranged along the width direction of the medium 2 (i.e., the right-left direction). The controller 22 drives piezoelectric elements (not illustrated) corresponding to the nozzles 28 to selectively eject a pretreatment liquid from the nozzles 28 toward the medium 2 moving along the path 100. The pretreatment liquid is applied to the medium 2 in this way. The number and arrangement of the nozzles 28 are not particularly limited.

The image forming apparatus 10 further comprises a drying device 30. The drying device 30 is located downstream of the pretreatment liquid line head 26 on the path 100. The drying device 30 may be, for example, a dryer, an oven, or an IR heater. The controller 22 controls the drying device 30 to dry the pretreatment liquid on the medium 2 moving along the path 100. The drying device 30 may be any one of a dryer, an oven, and an IR heater or may be any combination thereof.

The image forming apparatus 10 further comprises four frames 32a, 32b, 32c, 32d and four ink line heads 34a, 34b, 34c, 34d. Each of the frames 32a to 32d supports corresponding one of ink line heads 34a to 34d. Each of the four ink line heads 34a to 34d ejects corresponding one of a cyan ink, a magenta ink, a yellow ink, and a black ink. The four ink line heads 34a to 34d are located downstream of the drying device 30 on the path 100. The four ink line heads 34a to 34d are separated from each other in the moving direction of the medium 2 (i.e., the front-rear direction). Since the four ink line heads 34a to 34d have substantially the same configuration, the following description focuses on the ink line head 34a alone.

A plurality of nozzles 36a is open on the lower surface of the ink line head 34a. The nozzles 36a are arranged along the width direction of the medium 2 (i.e., the right-left direction). The controller 22 drives piezoelectric elements (not illustrated) corresponding to the nozzles 36a to selectively eject the ink from the nozzles 36a toward the medium 2 moving along the path 100. Images are recorded on the medium 2 in this way. The number and arrangement of the nozzles 36a are not particularly limited.

The image forming apparatus 10 further comprises a drying device 38. The drying device 38 is located downstream of the ink line heads 34a to 34d on the path 100. The drying device 38 may be, for example, a dryer, an oven, or an IR heater. The controller 22 controls the drying device 38 to dry the ink on the medium 2 moving along the path 100. The drying device 38 may be any one of a dryer, an oven, and an IR heater or may be any combination thereof.

(Medium)

The medium 2 is a non-absorbable medium or a low-absorbable medium. Examples of the non-absorbable medium include, for example, plastic films without surface treatment for inkjet printing (i.e., without any ink absorbing layers), plastic-coated media (e.g., plastic-coated film or plastic-coated paper), and media (e.g., paper) to which plastic films adhere. Examples of the plastic include, for example, polypropylene, polyethylene, polyethylene terephthalate, polyvinyl chloride resin, and polycarbonate. Examples of the low-absorbable medium include, for example, art paper, coated paper, and matte paper. The coated paper is produced by applying a coating agent to regular paper mainly made of pulp such as high-grade printing paper and middle-grade printing paper in order to improve, for example, smoothness, whiteness level, and glossiness. Specific examples of the coated paper include, for example, high-grade coated paper and middle-grade coated paper.

Examples of the non-absorbable medium and the low-absorbable medium are listed above. However, in addition to the examples of medium listed above, the non-absorbable medium and the low-absorbable medium may comprise, for example, media that are capable of absorbing water of 10 mL/m² or less within 30 msec^{1/2} from the start of contact in the Bristow method. The Bristow method herein is, for example, specified in "JAPAN TAPPI Pulp and Paper Test Methods, 2000 edition", No. 51 "Paper and Paperboard-Test Methods for Liquid Absorbing Properties-Bristow Method".

### (Pretreatment Liquid)

The pretreatment liquid comprises a cationic flocculant and water. When the pretreatment liquid contacts an ink on the medium 2, the cationic flocculant can flocculate an anionic solid component of the ink.

An example of the cationic flocculant includes, for example, a cationic polymer. The cationic polymer may be a natural polymer or a synthetic polymer. The cationic polymer is a polymer with a cation group or a group that can be ionized to a cation group (e.g., a primary amino group, a secondary amino group, a tertiary amino group, a quaternary ammonium group, etc.) and includes an ampholytic polymer that is cationic as a whole. Examples of the cationic polymer include, for example, ammonium-containing polymers, amine-containing polymers, polyallylamine, polydiallylamine, polytriallylamine, polyvinylamine, polyimine, polyvinylpyrrolidone, polyethylenimine, polyvinylpyridine, aminoacetalized polyvinyl alcohol, ionene polymers, polyvinyl imidazole, polyvinyl benzylphosphonium, polyalkyl allyl ammonium, polyamidine, polyamine sulphone, and polymethyl diallylamine. As the cationic polymer, only one type of cationic polymer alone may be used, or two or more types of cationic polymers may be used in combination.

From the viewpoint of flocculating an anionic component of ink, the cationic polymer may comprise a polyallylamine family. The polyallylamine family herein refers to polymers with allylamine-derived repeating units. The polyallylamine family includes, for example, polymers including allylamine and/or its derivatives as repeating units, polymers including diallylamine and/or its derivatives as repeating units, and polymers including triallylamine and/or its derivatives as repeating units.

From the viewpoint of flocculating an anionic component of ink, among the members of the polyallylamine family listed above, polymers including at least one of repeating units expressed in formulas (1) to (4) below may be used.

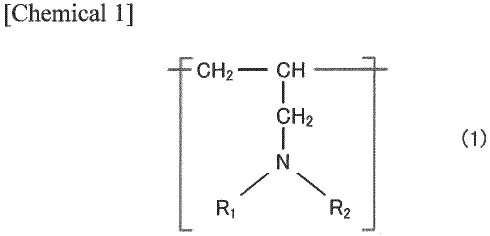

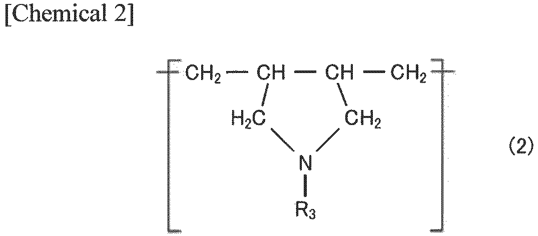

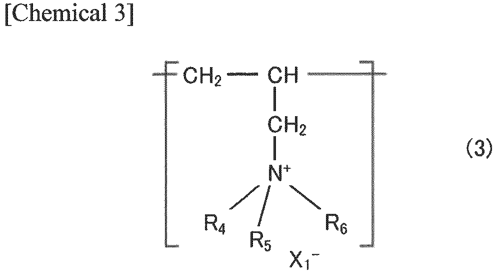

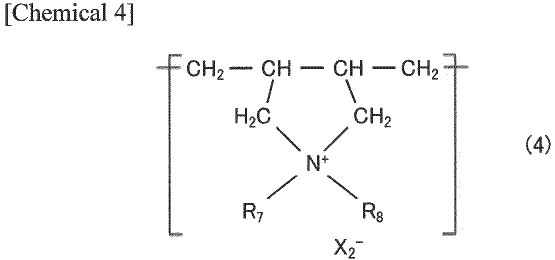

In the formula (1), each of R₁ and R₂ represents hydrogen or an alkyl group. The carbon number of the alkyl group is, for example, in a range of 1 to 10 or in a range of 1 to 5. The alkyl group may have a substituent group such as a carboxy group and may be in a straight-chain form or a branched-chain form.

In the formula (2), R₃ represents hydrogen or an alkyl group. The carbon number of the alkyl group is, for example, in a range of 1 to 10 or in a range of 1 to 5. The alkyl group may have a substituent group such as a carboxy group and may be in a straight-chain form or a branched-chain form.

In the formula (3), each of R₄, R₅, and R₆ represents hydrogen or an alkyl group. The carbon number of the alkyl group is, for example, in a range of 1 to 10 or in a range of 1 to 5. The alkyl group may have a substituent group such as a carboxy group and may be in a straight-chain form or a branched-chain form. In the formula (3), X₁⁻represents an anion. Examples of X₁⁻ include, for example, sulfuric acid methyl ion, ethylsulfuric acid ion, chloride ion, sulfate ion, acetate ion, phosphate ion, citrate ion, and amidosulfuric acid ion.

In the formula (4), each of R₇ and R₈ represents hydrogen or an alkyl group. The carbon number of the alkyl group is, for example, in a range of 1 to 10 or in a range of 1 to 5. The alkyl group may have a substituent group such as a carboxy group and may be in a straight-chain form or a branched-chain form. In the formula (4), X₂⁻ represents an anion. Examples of X₂⁻ include, for example, sulfuric acid methyl ion, ethylsulfuric acid ion, chloride ion, sulfate ion, acetate ion, phosphate ion, citrate ion, and amidosulfuric acid ion.

For example, commercially available polymer(s) may be used as the cationic polymer. Examples of such commercially available polymers include, for example, "PAS-M-1A" which is a methyldiallylamine acetate polymer and "PAA-U5000" which is a partially methoxycarbonylated allylamine polymer, both available from Nittobo Medical Co., Ltd. The polymer "PAS-M-1A" is a cationic polymer including methyldiallylamine represented in the formula (4) as repeating units, where R₇ is hydrogen, R₈ is a methyl group, and X₂⁻ is an acetate ion. The polymer "PAA-U5000" is a cationic polymer including allylamine represented in the formula (1) as repeating units, where R₁ is hydrogen and R₂ is hydrogen. Here, a part of R₂ may be a methoxycarbonyl group.

When the cationic polymer is water-soluble, the cation concentration of the cationic polymer is, for example, 6.0 Eq/L or more, 7.0 Eq/L or more, 7.5 Eq/L or more, or 8.0 Eq/L or more. From the viewpoint of flocculating an anionic component of ink, the cation concentration of the cationic polymer may be 7.5 Eq/L or more. The cation concentration can be measured, for example, by a colloid titration method using a polyvinylsulfuric acid potassium salt reagent. The cation concentrations of the above polymers "PAS-M-1A" and "PAA-U5000" are 7.5 Eq/L and 6.0 Eq/L, respectively.

The weight-average molecular weight of the cationic polymer is, for example, in a range of 600 to 20000, in arrange of 900 to 15000, or in a range of 1200 to 10000.

The content of the cationic flocculant relative to the overall amount of the pretreatment liquid is, for example, in a range of 1 weight% or more and 5 weight % or less, in a range of 0.5 weight% or more and 3 weight% or less, or in a range of 0.75 weight% or more and 2 weight% or less.

Water may be ion-exchange water or pure water. The content of water relative to the overall amount of the pretreatment liquid is, for example, the balance excluding all the components but water.

The pretreatment liquid may further comprise a generally known water-soluble organic solvent. Examples of the water-soluble organic solvent include, for example, polyhydric alcohols, polyhydric alcohol derivatives, alcohols, amides, ketones, keto-alcohols, ethers, nitrogen-containing components, sulfur-containing components, propylene carbonate, ethylene carbonate, and 1,3-dimethyl-2-imidazolidinone.

The pretreatment liquid may further comprise a generally known additive, as needed. Examples of the additive include, for example, surfactants, pH adjusters, viscosity modifiers, surface-tension modifiers, oxidant inhibitors, and fungicides. For example, the surfactants may be commercially available ones. Examples of commercially available surfactants include, for example, "Olfine (registered trademark) E1010", "Olfine (registered trademark) E1006", "Olfine (registered trademark) E1004", "Silface SAG503A", and "Silface SAG002" from Nissin Chemical Industry Co., Ltd. The content of surfactant relative to the overall amount of the pretreatment liquid is, for example, 3 weight% or less, 2 weight% or less, or 1 weight% or less. Examples of the viscosity modifiers include, for example, polyvinyl alcohols, celluloses, and water-soluble resins.

The pretreatment liquid can be prepared, for example, by uniformly mixing the cationic flocculant, water, and optionally other additive(s) together by a generally known method, and then removing undissolved residue through a filter or the like.

### (Ink)

The ink comprises resin particles, a color material, an organic solvent, a surfactant, and water. The ink is an aqueous ink in which the resin particles, color material, and organic solvent are dissolved or dispersed in water.

The lower limit of a static surface tension (simply termed "surface tension" hereinafter) of all the components in the ink is, for example, 25.2 mN/m, 26.6 mN/m, or 27.0 mN/m. The upper limit of the static surface tension of all the components in the ink is, for example, 29.3 mN/m, 28.2 mN/m, or 28.0 mN/m. A range of the surface tension can be set by combining an upper limit and a lower limit listed above as desired. The range may be, for example, 25.2 mN/m or more and 29.3 mN/m or less, or 26.6 mN/m or more and 28.2 mN/m or less. The surface tension can be measured, for example, according to the Wilhelmy method, using a surface tensiometer and a platinum plate under a temperature of 25°C.

For example, resin particles comprising at least one of methacrylic acid and acrylic acid as monomer can be used as the resin particles. For example, commercially available resin particles may be used as the resin particles. The resin particles may further comprise, for example, styrene and/or vinyl chloride as monomer. The resin particles may be included in, for example, an emulsion. For example, the emulsion is constituted of the resin particles and water. The resin particles are not dissolved but dispersed in water and have particle diameters within a predetermined range. Examples of the resin particles include, for example, acrylic acid resins, maleate ester resins, vinyl acetate resins, carbonate resins, polycarbonate resins, styrene resins, ethylene resins, polyethylene resins, propylene resins, polypropylene resins, urethane resins, polyurethane resins, polyester resins, and copolymer resins thereof. The resin particles may include anionic resin particles, nonionic resin particles, or cationic resin particles. As the resin particles, only one type of resin particles may be used, or two or more types of resin particles may be used in combination.

The glass-transition temperature (Tg) of the resin particles is not particularly limited but may be, for example, in a range of 0°C or more to 200°C or less, in a range of 20°C or more to 180°C or less, or in a range of 30°C or more to 150°C or less.

For example, the emulsion may be a commercially available emulsion. Examples of commercially available emulsions include, for example, "SUPERFLEX (registered trademark) 870" and "SUPERFLEX (registered trademark) 150" from DKS Co. Ltd., "Mowinyl (registered trademark) DM774" and "Mowinyl (registered trademark) 6969D" from Japan Coating Resin Corporation, and "Hiros-X (registered trademark) KE-1062" and "Hiros-X (registered trademark) QE-1042" from Seikou PMC Co., Ltd.

The average particle diameter of the resin particles is not particularly limited but may be in a range of 30nm or more to 200 nm or less, or in a range of 50nm or more to 160nm ore less. The average particle diameter can be measured as an arithmetic mean diameter, using a dynamic-light-scattering particle diameter distribution measuring device "LB-550" from HORIBA, Ltd.

The content of solid component of the resin particles relative to the overall amount of the ink is, for example, in a range of 0.1 weight% or more to 30 weight% or less, in a range of 0.5 weight% or more to 20 weight% or less, or in a range of 1.0 weight% or more to 15.0 weight% or less.

For example, the color material is a pigment that is dispersible in water on its own or using a pigment dispersing resin (a resin dispersant). Examples of the pigment include, for example, carbon black, inorganic pigments, and organic pigments. Examples of carbon black include, for example, furnace black, lampblack, acetylene black, and channel black. Examples of the inorganic pigments include, for example, titanium oxide, iron oxide-based inorganic pigments, and carbon black-based inorganic pigments. Examples of the organic pigments include, for example, azo pigments, polycyclic pigments, dye lake pigments, nitro pigments, nitroso pigments, and aniline black daylight fluorescent pigments. The azo pigments may include, for example, azo lakes, insoluble azo pigments, condensed azo pigments, and/or chelated azo pigments. The polycyclic pigments may include, for example, phthalocyanine pigments, perylene and pelrinone pigments, anthraquinone pigments, quinacridone pigments, dioxazine pigments, thioindigo pigments, isoindolinone pigments, and/or quinophthalone pigments. The dye lake pigments may include, for example, basic dye-type lake pigments, acidic and/or dye-type lake pigments. Other examples of the pigment include, for example, C.I. pigment black 1, 6, 7; C.I. pigment yellow 1, 2, 3, 12, 13, 14, 15, 16, 17, 55, 73, 74, 75, 78, 83, 93, 94, 95, 97, 98, 114, 128, 129, 138, 150, 151, 154, 155, 180, 185, 194; C.I. pigment orange 31, 43; C.I. pigment red 2, 3, 5, 6, 7, 12, 15, 16, 48, 48:1, 48:3, 53:1, 57, 57:1, 112, 122, 123, 139, 144, 146, 149, 150, 166, 168, 175, 176, 177, 178, 184, 185, 190, 202, 209, 221, 222, 224, 238, 254; C.I. pigment violet 19, 196; C.I. pigment blue 1, 2, 3, 15, 15:1, 15:2, 15:3, 15:4, 16, 22, 60; C.I. pigment green 7, 36; and solid solutions thereof. The color material may include an anionic color material, a nonionic color material, or a cationic color material. As the color material, only one type of color material may be used, or two or more types of color materials may be used in combination.

The content of pigment solid component of the color material relative to the overall amount of the ink is, for example, in a range of 0.1 weight% or more to 20.0 weight% or less, or in a range of 1.0 weight% or more to 15.0 weight% or less.

The ink comprises at least one of anionic resin particles or an anionic color material as the anionic solid component. From the viewpoint of flocculating the anionic solid component of the ink, the color material in the ink may be anionic or nonionic in the case the ink comprises anionic resin particles.

The organic solvent has a predetermined surface tension. The lower limit of the predetermined surface tension herein is, for example, 28.0 mN/m, 28.5 mN/m, or 29.0 mN/m. The upper limit of the surface tension is, for example, 34.0 mN/m, 33.5 mN/m, or 33.0 mN/m. A range of the surface tension can be set by combining an upper limit and lower limit listed above as desired. For example, the range is 28.0 mN/m or more and 34.0 mN/m or less, 28.5 mN/m or more and 33.5 mN/m or less, or 29.0 mN/m or more and 33.0 mN/m or less. Examples of the organic solvent having the predetermined surface tension include, for example, tripropylene glycol (surface tension: 34.00 mN/m), triethylene glycol monobutyl ether (surface tension: 31.85 mN/m), and 1,2-hexanediol (surface tension: 28.14 mN/m). As the organic solvent having the predetermined surface tension, only one type of organic solvent may be used, or two or more types of organic solvents may be used in combination.

The lower limit of the content of the organic solvent having the predetermined surface tension relative to the overall amount of the ink is, for example, 7.5 weight%, 8.5 weight%, or 10.0 weight%. The upper limit of the content of the organic solvent having the predetermined surface tension relative to the overall amount of the ink is, for example, 24.0 weight%, 21.0 weight%, 18.0 weight%, or 15.0 weight%. A range of the content of the organic solvent can be set by combining an upper limit and lower limit listed above as desired. For example, the range is 7.5 weight% or more and 24.0 weight% or less, 8.5 weight% or more and 21.0 weight% or less, 10.0 weight% or more and 18.0 weight% or less, or 8.0 weight% or more and 15.0 weight% or less. From the viewpoint of suppressing the occurrence of Marangoni convection during drying of the ink, the content of the organic solvent may be 10.0 weight% or more and 18.0 weight% or less.

As the organic solvent, at least one kind of organic solvent having the above predetermined surface tension is used. The at least one kind of organic solvent is not particularly limited as long as the content of the organic solvent(s) relative to the overall amount of the ink is within a predetermined range. In one example, the organic solvent may further comprise other organic solvent(s) (e.g., propylene glycol (surface tension: 37.08 mN/m), methyl alcohol (surface tension: 22.60 mN/m), ethyl alcohol (surface tension: 22.55 mN/m), glycerin (surface tension: 63.40 mN/m), ethyl ether (surface tension: 16.96 mN/m)) in addition to the above organic solvent(s) having the predetermined surface tension.

The surfactant is not particularly limited, and any surfactant can be used. For example, the surfactant may be a commercially available surfactant. Examples of commercially available surfactants include, for example, "Olfine (registered trademark) E1010", "Olfine (registered trademark) E1006", "Olfine (registered trademark) E1004", "Silface SAG503A", and "Silface SAG002" from Nissin Chemical Industry Co., Ltd. The content of the surfactant relative to the overall amount of the ink is not particularly limited. For example, the content is in a range of 0.01 weight% or more to 5.0 weight% or less, in a range of 0.05 weight% or more to 4.0 weight% or less, or in a range of 0.1 weight% or more to 3.0 weight% or less.

The ink may further comprise a generally known additive, as needed. Examples of the additive include, for example, pH adjusters, viscosity modifiers, surface-tension modifiers, preservatives, and fungicides. Examples of the viscosity modifiers include, for example, polyvinyl alcohols, cellulose, and water-soluble resins.

Water may be ion-exchange water or pure water. The content of water relative to the overall amount of the ink is, for example, the balance excluding all the components of the ink but water.

The ink can be prepared, for example, by uniformly mixing the resin particles, the color material, the organic solvent, water, and optionally other additive(s) together by a generally known method, and then removing undissolved residue through a filter or the like.

### (Image Forming Method)

Next, an image forming method using the image forming apparatus 10 is described. The image forming method comprises a pretreatment liquid applying step, a first drying step, an image forming step, and a second drying step. The pretreatment liquid applying step, the first drying step, the image forming step, and the second drying step are performed in this order. For example, the controller 22 causes the image forming apparatus 10 to perform these steps in response to receiving an external instruction to form an image using the image forming apparatus 10. When receiving the above instruction, the controller 22 controls relevant units, such as the first roller pair 16 and the second roller pair 18, to move the medium 2 along the path 100.

### (Pretreatment Liquid Applying Step)

In the pretreatment liquid applying step, the controller 22 causes the image forming apparatus 10 to apply the pretreatment liquid onto a surface of the medium 2 moving along the path 100. The controller 22 controls the piezoelectric elements (not illustrated) corresponding to the nozzles 28 to selectively eject the pretreatment liquid from the nozzles 28 toward the medium 2 moving under the pretreatment liquid line head 26. The pretreatment liquid is applied to the surface of the medium 2 in this way.

### (First Drying Step)

In the first drying step, the pretreatment liquid on the medium 2 is dried. The controller 22 controls the drying device 30 to dry the pretreatment liquid on the surface of the medium 2 moving under the drying device 30.

In this image forming method, the drying rate of the pretreatment liquid after the first drying step is 100%. The drying rate of 100% can avoid, when the ink is applied onto the medium 2 in the image forming step following the first drying step, mixing of the pretreatment liquid with the ink, effectively suppressing spread of the ink. The drying rate of the pretreatment liquid can be calculated based on a change between the weight of pretreatment liquid before the first drying step and the weight of pretreatment liquid after the first drying step. The drying rate of the pretreatment liquid is calculated, for example, as a ratio of the decreased weight of pretreatment liquid during the first drying step to the overall weight (100 weight%) of evaporable components in the pretreatment liquid.

### (Image Forming Step)

In the image forming step, the controller 22 causes the image forming apparatus 10 to apply each ink onto the surface of the medium 2 moving along the path 100. The controller 22 controls the piezoelectric elements (not illustrated) corresponding to the nozzles 36a to 36d to selectively eject one of inks from each of the nozzles 36a to 36d toward the medium 2 moving under the four ink line heads 34a to 34d. An image is formed on the surface of the medium 2 in this way.

### (Second Drying Step)

In the second drying step, each ink on the medium 2 is dried. The controller 22 controls the drying device 38 to dry each ink on the surface of the medium 2 moving under the drying device 38. By the end of the second drying step, a predetermined amount of aqueous components in each ink has evaporated. The predetermined amount herein may be varied as desired. For example, the predetermined amount is 80 weight%, 90 weight%, 95 weight%, or 100 weight% of aqueous components in each ink.

The upper limit of difference between the surface tension of all the components in each ink and the surface tension of remaining component(s) in the ink after the second drying step is, for example, 3.5 mN/m, 3.0 mN/m, 2.5 mN/m, 2.0 mN/m, 1.5 mN/m, or 1.0 mN/m. The surface tension of remaining component(s) in the ink after the second drying step can be measured, for example, by measuring a surface tension of the ink on the medium 2 after the medium 2 has moved under the drying device 38. Alternatively, as in this embodiment, the surface tension of an ink prepared by mixing components of the ink except the aqueous components may be considered as the surface tension of remaining components in the ink after the second drying step. This is because the components evaporating as the ink is dried are considered as the aqueous components in the ink and the remaining components in the ink except the aqueous components can be considered as the components in the ink after the second drying step. In this embodiment, as will be described later, 100 weight% of the aqueous components in the ink has been evaporated in the ink after drying, and the predetermined amount above corresponds to 100 weight% of the aqueous components in the ink. The aqueous components herein include water, components contained in water, and components containing water. The components contained in water refer to components that contain a relatively large amount of water and thus their active substances are dispersed in water. The components containing water refer to components that contain a relatively small amount of water and thus water is present in their active substances. The difference of 3.5 mN/m or less between the surface tension of all the components in the ink and the surface tension of remaining components in the ink after the second drying step can suppress a local change in the surface tension of the ink during the drying of ink.

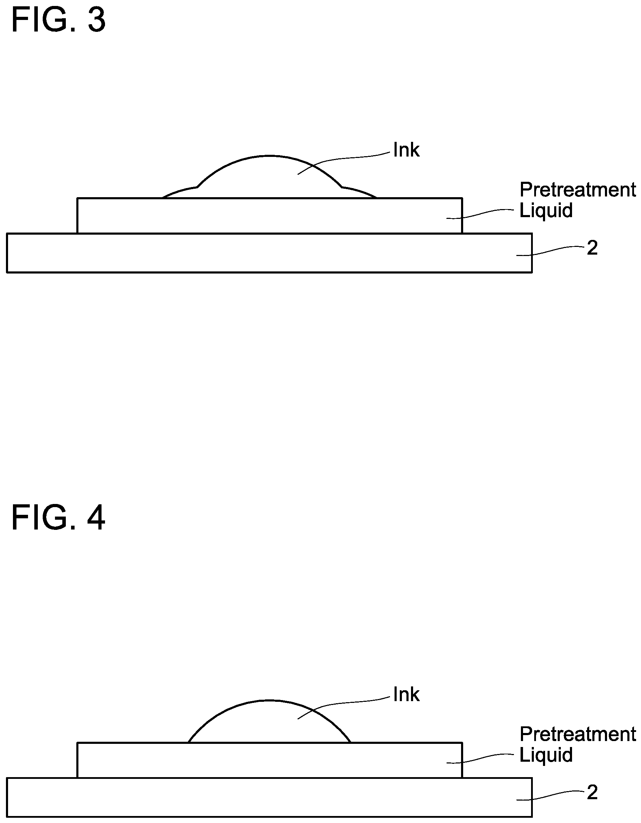

As illustrated in FIG. 3, when an ink having a relatively low surface tension (e.g., in a range of 25.2 mN/m or more to 29.3 mN/m or less) is applied onto the medium 2, the ink may unexpectedly spread over the medium 2. This becomes pronounced especially when the medium 2 is a non-absorbable medium or a low-absorbable medium. In the above-described image forming method, the pretreatment liquid comprising the flocculant having the cation concentration of 6.0 Eq/L or more is applied onto the medium 2 in advance. Thus, as illustrated in FIG. 4, when the ink is applied onto the medium 2, the cationic flocculant in the pretreatment liquid can flocculate the anionic solid component in the ink, thereby suppressing spread of the ink.

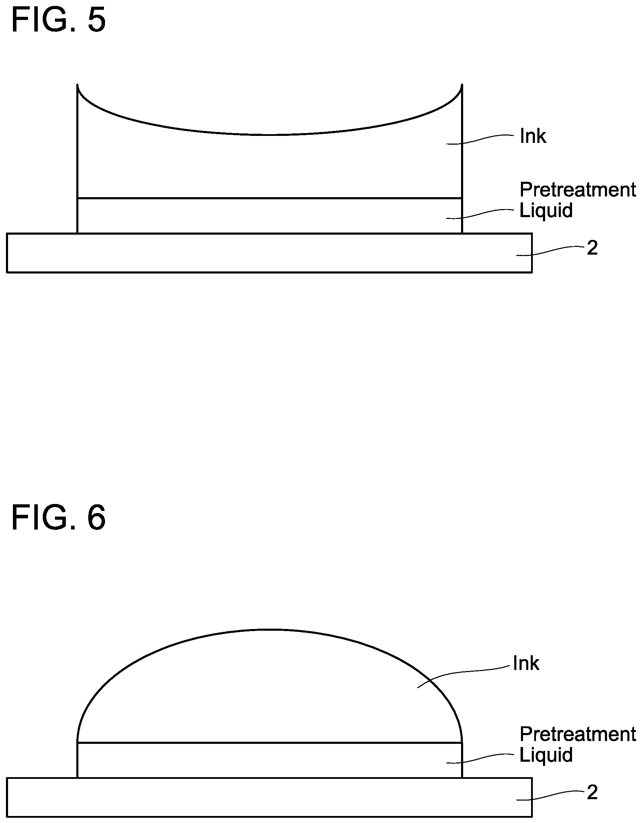

However, using a relatively large amount of ink to form a solid image may leads to an insufficient flocculate of the solid component even using the above pretreatment liquid. In this case, the ink to form a solid image on the medium 2 is gradually dried on the medium 2. In the course of the drying, Marangoni convection may be generated due to a surface tension gradient associated with unevenly distributed components of the ink. The Marangoni convection may unexpectedly contract the ink and/or cause the coffee ring phenomenon (see FIG. 5), thus may decrease solid uniformity. In this regard, the above-described image forming method adjusts the surface tensions of the ink before and after the drying such that the difference therebetween becomes 3.5 mN/m or less, thereby suppressing a significant change in the surface tension of the ink during the drying. Thus, a decrease in solid uniformity can be suppressed as illustrated in FIG. 6.

In this embodiment, the image forming step is performed by the ink line heads 34a to 34d. This line head scheme can form an image on the medium 2 at a faster speed compared to a serial head scheme, which means a larger amount of ink is ejected per unit time with the line head scheme. Thus, an amount of ink applied onto the medium 2 per unit time is larger. For this reason, the line head scheme requires adjusting the surface tension of ink during the drying thereof, similar to forming a solid image. In this regard, the above-described image forming method adjusts the surface tensions of the ink before and after the drying thereof such that the difference therebetween becomes 3.5 mN/m or less, thereby suppressing a significant change in the surface tension of the ink during the drying. Thus, a decrease in solid uniformity can be suppressed.

### (Correspondence Relationships)

The image forming method is an example of "method of applying an ink composition". The ink is an example of "ink composition". The pretreatment liquid applying step is an example of "applying a pretreatment liquid". The image forming step is an example of "applying an ink composition".

### (Examples and Comparative Examples)

Various pretreatment liquids and inks are described by examples and comparative examples below. It is to be understood that the disclosure herein is not limited to these examples.

### (Preparation of Pretreatment Liquids and Inks)

The components shown in Table 1 were mixed together to prepare pretreatment liquids 1 to 7. The components shown in Tale 2 were mixed together to prepare inks 1 to 13. The numerical values for the components in the tables indicate the contents of the components relative to the overall amount of pretreatment liquid or ink in weight%. The cation concentrations of the flocculants in Table 1 were measured by a colloid titration method using a polyvinylsulfuric acid potassium salt reagent. A specific measurement procedure was as follows. First, a cationic polymer was put into a conical beaker to prepare 10 ppm of cationic polymer aqueous solution by using pure water. Then, four to five drops of a toluidine blue indicator (from FUJIFILM Wako Pure Chemical Corporation) were added to the aqueous solution, and the aqueous solution was titrated using a N/400 polyvinylsulfuric acid potassium salt regent (N/400PVSK) (from FUJIFILM Wako Pure Chemical Corporation). In the titration, the regent N/400PVSK was dropped by 100 µL at a time. The endpoint of the titration was set at a point where the color of test solution is kept unchanged for 10 seconds since the color started to change from blue to purple. The cation concentration (Eq/L) was calculated using the following formula: Cation concentration = 1/400 × (amount of N/400PVSK used for titration)/overall amount of cationic polymer in test solution.

The content of resin particles in Table 2 represents the content of solid components of the resin particles. The content of color material in Table 2 represents the content of solid components of the pigment. For (A) Static Surface Tension of All Components of Ink in Table 2, adjusted inks 1 to 13 were measured by the Wilhelmy method, using a surface tensiometer and a platinum plate under a temperature of 25°C. For (B) Static Surface Tension of Remaining Components of Ink after Drying in Table 2, components of each ink 1 to 13 except the aqueous components were mixed to prepare inks that do not contain the aqueous components, and such prepared inks were measured by the Wilhelmy method, using a surface tensiometer and a platinum plate under a temperature of 25°C. That is, in this example, the inks that do not contain the aqueous components were considered as the inks 1 to 13 after drying, to measure the static surface tensions of remaining components in the inks after drying. In the inks 1 to 13, water, Mowinyl 6969D, and a magenta pigment are the aqueous components.

**Table 1**

| Material Name | | Pretreatment Liquid 1 | Pretreatment Liquid 2 | Pretreatment Liquid 3 | Pretreatment Liquid 4 | Pretreatment Liquid 5 | Pretreatment Liquid 6 | Pretreatment Liquid 7 |
|---|---|---|---|---|---|---|---|---|
| Flocculant | PAS-M-1A (Cation Concentration : 7.5Eq/L) | 1.25 | - | - | - | - | - | - |
| | PAA-U5000 (Cation Concentration : 6.0Eq/L) | - | 1.25 | - | - | - | 2.00 | 3.00 |
| | PAS-SY-1 (Cation Concentration : 3.0Eq/L) | - | - | 1.25 | - | - | - | - |
| | Magnesium Sulfate Heptahydrate | - | - | - | 1.25 | - | - | - |
| | Succinic Acid | - | - | - | - | 1.25 | - | - |
| Surfactant | Silface 503A | 0.1 | 0.1 | 0.1 | 0.1 | 0.1 | 0.1 | 0.1 |
| Water | Pure Water | Balance | Balance | Balance | Balance | Balance | Balance | Balance |
| Total | | 100 | 100 | 100 | 100 | 100 | 100 | 100 |

**Table 2**

| Material Name | | Ink 1 | Ink 2 | Ink 3 | Ink 4 | Ink 5 | Ink 6 | Ink 7 | Ink 8 | Ink 9 | Ink 10 | Ink 11 | Ink 12 | Ink 13 |
|---|---|---|---|---|---|---|---|---|---|---|---|---|---|---|
| Organic Solvent | Propylene Glycol (Surface Tension : 37.08mN/m) | - | - | - | 18.0 | 18.0 | 18.0 | - | - | - | - | - | - | - |
| | Tripropylene Glycol (Surface Tension : 34.00mN/m) | - | - | - | - | - | - | - | - | - | - | 18.0 | - | - |
| | Triethylene Glycol Monobutyl Ether (Surface Tension : 31.85mN/m) | 18.0 | 5.0 | 10.0 | - | - | - | 7.5 | 24.0 | - | 18.0 | - | 18.0 | 27.0 |
| | 1,2-Hexanediol (Surface Tension : 28.14mN/m) | - | - | - | - | - | - | - | - | 18.0 | - | - | - | - |
| Surfactant | Silface 503A | 0.5 | 0.5 | 0.5 | - | - | 0.5 | 0.5 | 0.5 | - | 2.0 | 0.5 | - | 0.5 |
| | Olfine E1010 | - | - | - | 0.5 | - | - | - | - | - | - | - | - | - |
| | Olfine E1004 | - | - | - | - | 0.5 | - | - | - | 2.0 | - | - | - | - |
| | Surflon S-243 | - | - | - | - | - | - | - | - | - | - | - | 0.085 | - |
| Resin Particles | Mowinyl 6969D | 7.0 | 7.0 | 7.0 | 7.0 | 7.0 | 7.0 | 7.0 | 7.0 | 7.0 | 7.0 | 7.0 | 7.0 | 7.0 |
| Color Material | Magenta Pigment* | 1.6 | 1.6 | 1.6 | 1.6 | 1.6 | 1.6 | 1.6 | 1.6 | 1.6 | 1.6 | 1.6 | 1.6 | 1.6 |
| Water | Pure Water | Balance | Balance | Balance | Balance | Balance | Balance | Balance | Balance | Balance | Balance | Balance | Balance | Balance |
| Total | | 100 | 100 | 100 | 100 | 100 | 100 | 100 | 100 | 100 | 100 | 100 | 100 | 100 |
| (A) Static Surface Tension of All Components of Ink Composition | | 28.2 | 28.9 | 28.0 | 33.9 | 30.0 | 26.6 | 27.8 | 29.3 | 27.0 | 25.2 | 26.6 | 24.6 | 30.6 |
| (B) Static Surface Tension of Remaining Component(s) of Ink Composition after Drying | | 31.2 | 30.9 | 31.3 | 35.2 | 34.8 | 28.8 | 31.2 | 31.9 | 28.4 | 27.2 | 29.6 | 25.8 | 32.1 |
| Difference between (A) and (B) | | 3.0 | 2.0 | 3.3 | 1.3 | 4.8 | 2.1 | 3.4 | 2.6 | 1.4 | 2.0 | 3.0 | 1.2 | 1.5 |

| | | | | | | | | | | | | | | |
|---|---|---|---|---|---|---|---|---|---|---|---|---|---|---|
| *C.I. Pigment Red 122 dispersed in water (including a resin dispersant) | | | | | | | | | | | | | | |

Raggedness and mottle were evaluated as below for various samples produced by using combinations of the prepared pretreatment liquids and inks. The drying rate of each pretreatment liquid in Tables 3 and 4 was calculated as a ratio of the decreased weight of pretreatment liquid due to drying to the overall weight (100 weight%) of water in the pretreatment liquid, where water in the pretreatment liquid is an evaporative component.

### (Raggedness Evaluation)

Samples were prepared according to the conditions (pretreatment liquid, ink, medium, drying rate of pretreatment liquid) for examples shown in Tables 3 and 4. Specifically, each sample was prepared by applying a pretreatment liquid onto the medium 2, drying the pretreatment liquid, and applying an ink onto the medium 2 using an inkjet recording device "MFC-J7100CDW" from Brother Industries, Ltd. to form one dotted line (resolution: 600 dpi × 600 dpi). Raggedness of these samples were measured by a handy image assessment system "PIAS (registered trademark)-II" from Quality Engineering Associates (QEA) and evaluated according to the criteria below. The evaluation results are shown in Tables 3 and 4. The raggedness herein means line raggedness defined by ISO-13660. A ragged line has wavy line edges despite ideal line edges being smooth and straight.
AA: raggedness of less than 0.004 mm
A: raggedness in a range of 0.004 mm or more and less than 0.005 mm
B: raggedness in a range of 0.005 mm or more and less than 0.006 mm
C: raggedness of 0.006 mm or more

### (Mottle Evaluation)

Samples were prepared according to the conditions (pretreatment liquid, ink, medium, drying rate of pretreatment liquid) for examples shown in Tables 3 and 4. Specifically, each sample was prepared by applying a pretreatment liquid onto the medium 2, drying the pretreatment liquid, and applying an ink onto the medium 2 using the inkjet recording device "MFC-J7100CDW" from Brother Industries, Ltd. to form a solid image (300% duty at resolution of 600 dpi × 600 dpi). Mottle of these samples were measured by the above-mentioned system "PIAS (registered trademark)-II" and evaluated according to the criteria below. The evaluation results are shown in Tables 3 and 4. In Tables 3 and 4, PET represents a polyethylene terephthalate film of 38 µm (from TOPPAN Inc.), PP represents a polypropylene film of 40 µm (from Futamura Chemical Co., Ltd.), and coated pater represents coated paper of 145 µm (from Oji Tac Co., Ltd.).
A: mottle of 3.0 or less
B: mottle in a range of 3.1 or more to 10.0 or less
C: mottle of 10.1 or more

**Table 3**

| | | Example1 | Example2 | Example3 | Example4 | Example5 | Example6 | Example7 | Example8 | Example9 | Example10 | Example11 | Example12 | Example13 |
|---|---|---|---|---|---|---|---|---|---|---|---|---|---|---|
| Pretreatment Liquid | | 1 | 1 | 1 | 1 | 1 | 1 | 2 | 1 | 1 | 1 | 1 | 1 | 1 |
| Ink | | 1 | 10 | 8 | 7 | 9 | 11 | 1 | 1 | 1 | 1 | 1 | 3 | 3 |
| Recording Medium | | PET | PET | PET | PET | PET | PET | PET | PP | Coated Paper | PET | PET | PET | PET |
| Drying Rate of Pretreatment Liquid [%] | | 100 | 100 | 100 | 100 | 100 | 100 | 100 | 100 | 100 | 50 | 70 | 50 | 100 |
| Result | Raggedness | AA | B | B | B | B | B | B | AA | A | B | A | B | AA |
| | | 0.003 | 0.005 | 0.005 | 0.005 | 0.005 | 0.005 | 0.005 | 0.003 | 0.004 | 0.005 | 0.004 | 0.005 | 0.003 |
| | Mottle | A | A | A | A | A | B | A | A | A | A | A | A | A |
| | | 1.4 | 1.2 | 2.8 | 1.3 | 2.2 | 3.2 | 1.8 | 0.7 | 0.3 | 0.7 | 0.5 | 0.5 | 1.2 |

**Table 4**

| | | Example14 | Example15 | Comparative Example1 | Comparative Example2 | Comparative Example3 | Comparative Example4 | Comparative Example5 | Comparative Example6 | Comparative Example7 | Comparative Example8 | Comparative Example9 | Comparative Example10 |
|---|---|---|---|---|---|---|---|---|---|---|---|---|---|
| Pretreatment Liquid | | 6 | 7 | 1 | 1 | 1 | 1 | 1 | 1 | 4 | 5 | 3 | 1 |
| Ink | | 1 | 1 | 12 | 4 | 5 | 6 | 2 | 13 | 1 | 1 | 1 | 1 |
| Recording Medium | | PET | PET | PET | PET | PET | PET | PET | PET | PET | PET | PET | PET |
| Drying Rate of Pretreatment Liquid [%] | | 100 | 100 | 100 | 100 | 100 | 100 | 100 | 100 | 100 | 100 | 100 | 20 |
| Result | Raggedness | A | AA | C | C | B | C | C | C | C | C | C | C |
| | | 0.003 | 0.002 | 0.006 | 0.007 | 0.004 | 0.006 | 0.013 | 0.006 | 0.008 | 0.007 | 0.006 | 0.020 |
| | Mottle | A | A | A | C | C | B | B | A | B | A | A | A |
| | | 1.3 | 0.4 | 1.0 | 16.2 | 11.7 | 4.0 | 5.0 | 2.1 | 3.1 | 0.8 | 1.1 | 2.0 |

### (Raggedness Results)

In samples with smaller raggedness, the dotted lines formed on the medium 2 have less-wavy line edges, in other words, the inks spread less on the medium 2. Conversely, in samples with larger raggedness, the dotted lines formed on the medium 2 have more-wavy line edges, in other words, the inks spread more on the medium 2. Hereinafter, samples with less spread of ink are expressed as being superior in ink spread resistance (see FIG. 4), while samples with more spread of ink are expressed as being inferior in ink spread resistance (FIG. 3).

As shown in Tables 3 and 4, the samples of examples 1 to 15 have been conformed as being superior in ink spread resistance, while the samples of comparative examples 7 and 8 have been confirmed as being inferior in ink spread resistance. Kinds of cationic flocculants in the pretreatment liquids used for the samples of comparative examples 7 and 8 are different from those used for examples 1 and 7. From comparison between these examples and comparative examples, it has been confirmed that the samples of examples 1 and 7 for which the pretreatment liquids comprising cationic flocculants were used are superior in ink spread resistance.

Among the samples of examples 1 and 7 and comparative example 9, their pretreatment liquids contain cationic polymers having different cation concentrations. From comparison between these examples and comparative example, it has been confirmed that the samples of examples 1 and 7 for which "PAS-M-1A" and "PAA-U5000" having the cationic concentration of 6.0 Eq/L or more were used are superior in ink spread resistance. It has been also confirmed that the sample of example 1 for which "PAS-M-1A" having the cation concentration of 7.5 Eq/L was used is superior in ink spread resistance over the sample of example 7 for which "PAA-U5000" having the cation concentration of 6.0 Eq/L was used. These results are thought to be because cationic polymers having more cationic groups could more effectively flocculate anionic solid components.

Among the samples of examples 2, 14, and 15, the contents of "PAA-U5000" in their pretreatment liquids relative to the overall amounts thereof are different. From comparison between these examples, it has been confirmed that samples for which pretreatment liquids containing more "PAA-U5000" relative to the overall amounts thereof were used tend to be superior in ink spread resistance. This result is thought to be because the larger proportion of cationic polymers could more effectively flocculate anionic solid components.

Among the samples of examples 1 to 6 and 13 and comparative examples 1, 2, and 6, their inks are different in surface tension of all ink components. From comparison between these examples and comparative examples, it has been confirmed that the samples of examples 1 to 6 and 13 for which the inks having surface tensions of all ink components in a range of 25.2 mN/m or more to 29.3 mN/m or less were used are superior in ink spread resistance.

Among the samples of examples 1, 5, and 6 and comparative examples 2 and 4, their inks are different in kind of organic solvent. From comparison between these examples and comparative examples, it has been confirmed that the samples of examples 1, 5, and 6 for which the inks containing organic solvents having surface tensions in a range of 28.0 mN/m or more to 34.0 mN/m or less were used are superior in ink spread resistance.

Among the samples of examples 1, 3, 4, and 13 and comparative examples 1, 5, and 6, their inks are different in content of triethylene glycol monobutyl ether relative to the overall amount of the ink. From comparison between these examples and comparative examples, it has been confirmed that the samples of examples 1, 3, 4, and 13 for which the inks containing triethylene glycol monobutyl ether in a range of 7.5 weight% or more to 24.0 weight% or less were used are superior in ink spread resistance.

Among the samples of examples 1, 10, and 11 and comparative example 10, their pretreatment liquids are different in drying rate. From comparison between these examples and comparative example, it has been confirmed that the samples of examples 1, 10, and 11 for which the pretreatment liquids having drying rates of 50% or more were used are superior in ink spread resistance. This result is thought to be because drying the pretreatment liquids until the drying rate reaches 50% or more could suppress, when the inks are applied onto the medium 2, the pretreatment liquids from mixing with the inks, thereby suppressing ink spread.

In addition to the above, when comparing the samples of examples 1, 10, and 11, it has been confirmed that the sample of example 1 has the highest ink spread resistance, the sample of example 11 has the second highest, and the sample of example 10 has the lowest. For drying rate of pretreatment liquid, the sample of example 1 had the highest drying rate, the sample of example 11 has the second highest, and the sample of example 10 has the lowest. That is, the samples for which the pretreatment liquids having higher drying rates were used are superior in ink spread resistance. This result is thought to be because drying the pretreatment liquids to higher drying rates before inks are applied onto the medium 2 suppresses the pretreatment liquids from mixing with the inks upon the application of inks onto the medium 2. Further, when comparing the samples of examples 12 and 13, the sample of example 13 for which the pretreatment liquid having a higher drying rate was used is superior in ink spread resistance. This is for the same reason as above.

### (Mottle Results)

Evaluation samples having smaller mottle values can be assessed as having less color unevenness in a solid image formed on the medium 2, that is, having higher uniformity of solid image (higher solid uniformity) as shown in FIG. 6. In contrast, evaluation samples having larger mottle values can be assessed as having more color unevenness in a solid image formed on the medium 2, that is, having lower solid uniformity, as shown in FIG. 5.

As shown in Tables 3 and 4, it has been confirmed that the samples of examples 1 to 15 are superior in solid uniformity, whereas the sample of comparative example 3 is inferior in solid uniformity. When compared with the samples of examples 1 to 6 and 13, the sample of comparative example 3 is different in the difference between ink surface tensions before and after drying. From comparison between these examples and comparative example, it has been confirmed that the samples of examples 1 to 6 and 13 in which the differences between ink surface tensions before and after drying were 3.5 mN/m or less are superior in solid uniformity. This result is thought to be because less change in the ink surface tension during drying of ink suppresses Marangoni convection, which is caused by surface tension gradient, from occurring in the ink, thereby suppressing a decrease in solid uniformity.

Among the samples of examples 1 to 6 and 13 and comparative example 2, their inks are different in surface tension of all ink components. From comparison between these examples and comparative example, it has been confirmed that the samples of examples 1 to 6 and 13 in which the surface tensions of all ink components were in a range of 25.2 mN/m or more to 29.3 mN/m or less are superior in solid uniformity.

Among the samples of examples 1, 5, and 6 and comparative example 4, their inks are different in surface tension of organic solvent contained therein. From comparison between these examples and comparative example, it has been confirmed that the samples of examples 1, 5, and 6 for which the inks containing organic solvents having surface tensions in a range of 28.0 mN/m or more to 34.0 mN/m or less were used are superior in solid uniformity. During drying of an ink, aqueous components of the ink evaporate because water is more evaporable than other components (e.g., organic solvent) contained in the ink. The drying speed of the ink in a solid image formed on the medium 2 is faster at an end portion of the solid image than at a central portion of the solid image. Thus, a proportion of the organic solvent is larger at the end portion of the solid image, while a proportion of water is larger at the central portion of the solid image. The inks containing the organic solvents having surface tensions within the above range allow for higher wettability at the end portion of solid image where the proportion of organic solvent is larger, thereby suppressing the occurrence of Marangoni convection.

Among the samples of examples 1, 3, 4, and 13 and comparative example 5, their inks are different in content of triethylene glycol monobutyl ether (surface tension: 31.85 mN/m) relative to the overall amount of the ink. From comparison between these examples and comparative example, it has been confirmed that the samples of examples 1, 3, 4, and 13 for which the inks containing triethylene glycol monobutyl ether in a range of 7.5 weight% or more to 24.0 weight% or less were used are superior in solid uniformity. This result is thought to be because the organic solvent is evenly distributed across the inks during drying thereof and uneven distribution of the organic solvent in the inks is suppressed. This suppresses uneven distribution of surfactant which tends to be present near the organic solvent, thereby decreasing the gradient of ink surface tension and suppressing Marangoni convection caused by the gradient. Further, when an ink comprises an organic solvent in a range of 7.5 weight% or more to 24.0 weight% or less relative to the overall amount of the ink and the organic solvent has a surface tension within a range of 28.0 mN/m or more to 34.0 mN/m or less, the organic solvent evenly distributes across the ink during drying thereof, allowing for higher wettability at an end portion of formed solid image and effectively suppressing the occurrence of Marangoni convection.

In addition to the above, it has been also confirmed that the samples of examples 1 and 3 for which the inks containing triethylene glycol monobutyl ether in a range of 10 weight% or more to 18 weight% or less relative to the overall amount of ink were used are superior in solid uniformity over the samples of examples 4 and 13. This result is thought to be because the larger contents of the organic solvent in the inks suppress uneven distribution of the organic solvent and surfactant having a strong affinity for the organic solvent.

Among the samples of examples 1, 8, and 9, types of medium 2 are different. From comparison between these examples, it has been confirmed that the use of non-absorbable media (polyethylene terephthalate and polypropylene) and low-absorbable medium (coated paper) as the medium 2 leads to superior ink spread resistance and solid uniformity. Thus, any non-absorbable medium and low-absorbable medium can be used as the medium 2.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below.

### (Modification 1)

In the embodiment described above, the ink may not comprise a color material. For example, instead of the ink, a clear ink that does not comprise a color material may be used. The clear ink is used to, for example, provide glossiness, protect a printed image, and improve image quality. The clear ink is an aqueous ink comprising resin particles as its solid component. In this modification, the clear ink is an example of "ink composition".

### (Modification 2)

The drying rate of the pretreatment liquid after the first drying step may be less than 100%. The drying rate may be, for example, 90% or more, 80% or more, 70% or more, 60% or more, or 50% or more. The drying rate may be set as desired by controlling, for example, drying temperature, drying time, and pressure during drying.

### (Modification 3)

In the embodiment described above, the image forming apparatus 10 may comprise an ink serial head instead of the ink line heads 34a to 34d. That is, the image forming step may be performed by the serail head instead of the ink line heads 34a to 34d. In other words, the image forming apparatus 10 may be a serial printer, not a line printer.

### (Modification 4)

In the embodiment described above, the image forming apparatus 10 may comprise, for example, a stamp, a brush, and/or a roller instead of the pretreatment liquid line head 26. In other words, the pretreatment liquid applying step may be performed, for example, by the stamp, brush, and/or roller instead of the pretreatment liquid line head 26. Further, in the pretreatment liquid applying step, the pretreatment liquid may be selectively applied onto a part of the medium 2 or the entire medium 2.

### (Modification 5)

In the embodiment described above, the image forming apparatus 10 may not comprise the drying device 38. In this case, after the ink has been applied onto the medium 2 by the image forming apparatus 10, the ink on the medium 2 may be dried by a drying device separate from the image forming apparatus 10, although this is merely an example. Alternatively, after the ink has been applied onto the medium 2 by the image forming apparatus 10, the medium 2 with the ink applied thereon may be left as it is for a predetermined period of time to vaporize the aqueous components of the ink. That is, after the ink has been applied onto the medium 2 by the image forming apparatus 10, the ink may be dried naturally without using the drying device 38.

## Claims

1. A method of applying an ink composition, comprising:
applying a pretreatment liquid onto a medium (2);
drying the pretreatment liquid on the medium (2) after the applying of the pretreatment liquid;
applying an ink composition onto the medium (2) after the drying of the pretreatment liquid; and
drying the ink composition on the medium (2) after the applying of the ink composition;
wherein
the medium (2) is a non-absorbable medium or a low-absorbable medium,
the pretreatment liquid comprises a flocculant of cationic polymer,
a cation concentration of the cationic polymer is 6.0 Eq/L or more,
a drying rate of the pretreatment liquid after the drying of the pretreatment liquid is 50% or more,
the ink composition comprises an anionic solid component, one or more organic solvents, a surfactant, and water,
a static surface tension of all components of the ink composition is 25.2 mN/m or more and 29.3 mN/m or less,
a difference between the static surface tension of all components of the ink composition and a static surface tension of one or more remaining components of the ink composition after the drying of the ink composition is 3.5 mN/m or less,
the one or more organic solvents comprise at least one organic solvent having a static surface tension of 28.0 mN/m or more and 34.0 mN/m or less, and
a content of the at least one organic solvent relative to an overall amount of the ink composition is 7.5 weight% or more and 24.0 weight% or less.

2. The method according to claim 1, wherein the drying rate of the pretreatment liquid after the drying of the pretreatment liquid is 70% or more.

3. The method according to claim 1 or 2, wherein the drying rate of the pretreatment liquid after the drying of the pretreatment liquid is 100%.

4. The method according to any one of claims 1 to 3, wherein the cationic polymer comprises a polyallylamine family.

5. The method according to claim 4, wherein the polyallylamine family comprises a methyldiallylamine acetate polymer, and a cation concentration of the polyallylamine family is 7.5 Eq/L or more.

6. The method according to any one of claims 1 to 5, wherein the content of the at least one organic solvent relative to the overall amount of the ink composition is 10 weight% or more and 18 weight% or less.

7. The method according to any one of claims 1 to 6, wherein the applying of the ink composition is performed by a line head configured to eject the ink composition.

8. A set of liquids used to apply an ink composition onto a medium (2) which is a non-absorbable medium or a low-absorbable medium, the set comprising:
a pretreatment liquid to be applied onto the medium (2); and
an ink composition to be applied onto the medium (2) and then dried after the pretreatment liquid has been applied onto the medium (2);
wherein
the pretreatment liquid comprises a flocculant of cationic polymer,
a cation concentration of the cationic polymer is 6.0 Eq/L or more,
the ink composition comprises an anionic solid component, one or more organic solvents, a surfactant, and water,
a static surface tension of all components of the ink composition is 25.2 mN/m or more and 29.3 mN/m or less,
a difference between the static surface tension of all components of the ink composition and a static surface tension of one or more remaining components of the ink composition after drying is 3.5 mN/m or less,
the one or more organic solvents comprise at least one organic solvent having a static surface tension of 28.0 mN/m or more and 34.0 mN/m or less, and
a content of the at least one organic solvent relative to an overall amount of the ink composition is 7.5 weight% or more and 24.0 weight% or less.
